Europäisches Patentamt

European Patent Office

Office européen des brevets

(19)

(11) Veröffentlichungsnummer: **0 172 476**

**A1**

(12)

# EUROPÄISCHE PATENTANMELDUNG

(21) Anmeldenummer: 85109752.7

(22) Anmeldetag: 02.08.85

(51) Int. Cl.⁴: **G 07 F 7/02**

(30) Priorität: 20.08.84 CH 3972/84

(43) Veröffentlichungstag der Anmeldung:
26.02.86 Patentblatt 86/9

(84) Benannte Vertragsstaaten:
AT CH DE FR GB IT LI

(71) Anmelder: AUTELCA AG
Worbstrasse 187
CH-3073 Gümligen(CH)

(72) Erfinder: Wey, Bruno
Wydenstrasse 32
CH-3076 Worb(CH)

(74) Vertreter: Keller, Hartmut et al,
Hartmut Keller Dr. René Keller Postfach 12
CH-3000 Bern 7(CH)

(54) Wertkarte mit Restwertmarkierung und Automat mit Markiervorrichtung für die Karte.

(57) Eine Wertkarte (1) kann zur Vermittlung von Leistungen eines oder mehrerer Automaten verwendet werden, bis die Summe der Werte der vermittelten Leistungen einen für die Wertkarte (1) vorgesehenen Gesamtwert (100) erreicht. Die Karte (1) hat eine Skala (2), deren Länge dem Gesamtwert (100) entspricht, und parallel zur Skala (2) ein Markierfeld (3), dessen Oberfläche durch Stromübergang örtlich begrenzt, dauerhaft und sichtbar veränderbar ist. Im Automaten laufen auf diesem Markierfeld (3) beim Karteneinzug und -rückschub eine schmale und eine breite Kontaktrolle (21, 22), die während eines Teiles des Kartenrückschubes mit einer Stromquelle (23) verbunden sind, um auf dem Markierfeld (3) durch Stromübergang an der schmalen Kontaktrolle (21) eine Strecke zu markieren, die neben dem Skalenende (100) beginnt, in Richtung (6) abnehmender Skalenwerte verläuft und bei jeder Verwendung der Karte (1) entsprechend dem Wert der dabei vermittelten Leistung verlängert wird, so dass neben dem Ende (8) der Markierung (4) der noch verfügbare Restwert der Karte an der Skala (2) ablesbar ist.

Fig.1

./...

Fig. 2

Wertkarte mit Restwertmarkierung und Automat mit
Markiervorrichtung für die Karte

Die Erfindung bezieht sich auf eine Wertkarte mit Restwertmarkierung und einen Automaten nach dem Oberbegriff
des Patentanspruchs 1.

Wertkarten können vom Karteninhaber mehrmals zur bargeldlosen Vermittlung von Leistungen (z.B. Dienstleistungen
oder Verkauf von Waren) durch für die Karten vorgesehene Automaten verwendet werden, bis die Summe der Werte
der einzelnen Leistungen den Gesamtwert der Karte erreicht hat.

Im praktischen Gebrauch ist es für den Karteninhaber
wichtig, den Restwert zu wissen, für den er mit der Karte noch Leistungen in Anspruch nehmen kann. Dazu ist
es wenig hilfreich, wenn der Leser des Automaten nach
dem Einführen der Karte den Restwert anzeigt. Der Restwert soll vielmehr visuell an der Karte selbst erkennbar
sein. Das ist z.B. bei magnetischer Aufzeichnung nicht
der Fall. Eine sowohl maschinell als auch visuell lesbare Aufzeichnung hat aber den Nachteil, dass sie vom
Karteninhaber leicht zu seinem Vorteil geändert werden
kann, was bei einer beispielsweise magnetischen Aufzeichnung, besonders wenn sie codiert und der Code dem
Karteninhaber nicht bekannt ist, ausgeschlossen werden
kann.

Deshalb wird dem Zweck, den Restwert visuell lesbar aufzuzeichnen und trotzdem einen sogenannten "Automatenmissbrauch" zu verhindern, am besten mit zwei Aufzeichnungen gedient, deren eine nur maschinell lesbar und für
den Automaten allein massgebend ist, und deren andere
nur zur Information des Karteninhabers dient, wie die
im Oberbegriff des Anspruchs 1 angegebene Markierung.
Verändert der Karteninhaber diese Markierung, so täuscht
er nur sich selbst. Eine unentgeltliche Leistung des
Automaten kann er dadurch nicht erschleichen. Das
schliesst natürlich eine Verwendung dieser auch maschinell lesbaren Markierung als einzige und damit auch für
den Automaten massgebende Aufzeichnung nicht aus, nur
muss dabei das Risiko missbräuchlicher Veränderungen
der Markierung in Kauf genommen werden.

Bisher wurden die den jeweiligen Teilwerten entsprechenden Strecken durch aufeinander folgende Reihen gestanzter Löcher oder mittels eines Farbschreibers markiert. Das Stanzen der Löcher ergibt eine Markierung
in groben Einheiten und erfordert eine Stanzvorrichtung, die genau mit einer schrittweise arbeitenden
Kartenvorschubvorrichtung zusammenarbeiten muss. Das
führt zu aufwendigen, räumlich umfangreichen Bewegungs- und Antriebsmechanismen, die wegen träger
Massen nur verzögert ansprechen und eine nennenswerte
Antriebsleistung benötigen. Farbschreiber erfordern weniger Leistung und keinen schrittweisen Kartenvorschub,
doch muss das Schreiborgan ähnlich wie das Stanzwerkzeug gehoben und gesenkt werden. Zur Vermeidung von Unannehmlichkeiten des Karteninhabers muss die Farbe sofort trocknen, und sie darf auch bei Regen- oder Schneefall nicht abfärben. Im Interesse des Betreibers der
Automaten darf die Farbe aber nicht zu schnell trocknen, um die bei solchen Schreibern grundsätzlich unvermeidlichen Unterhaltsarbeiten in Grenzen zu halten.

Hier will die Erfindung Abhilfe schaffen. Die Erfindung,
wie sie in den Ansprüchen gekennzeichnet ist, löst die
Aufgabe, eine Wertkarte mit Restwertmarkierung der genannten Art und einen Automaten mit Markiervorrichtung
für die Karte zu schaffen, die es ermöglichen, die bei
den einzelnen Verwendungen der Karte jeweils verbrauchten Teilwerte ohne schrittweisen Kartenvorschub, ohne
eine Hubbewegung eines Werkzeugs oder Schreiborgans und
ohne Verwendung einer färbenden Substanz genau zu markieren.

die durch die Erfindung erzielten Vorteile sind neben
der beständigen und nichtabfärbenden Markierung der
Wertkarte im wesentlichen darin zu sehen, dass die Kontaktrollen, die zweckmässig drehfest mit einer Rolle
eines Transportrollenpaares der Kartenführung des Automaten verbunden sind, keine eigene Bewegungs- oder
Antriebsvorrichtung erfordern, und dabei auch keinen
zusätzlichen Raum beanspruchen, weil sie innerhalb der
sowieso vorhandenen Kartenführung sind. Die Markiervorrichtung arbeitet ohne irgendwelche zusätzliche Mechanismen, insbesondere ohne eine hin- und hergehende Bewegung und ohne einen schrittweisen Kartenvorschub verzögerungsfrei und ohne Erschütterungen. Deshalb ist
nicht nur die Markiervorrichtung sondern der ganze
Automat einfacher und weniger störanfällig. Da kein
Stanzwerkzeug nachgeschliffen und kein Schreiber regelmässig gereinigt und mit Farbe versorgt werden muss,
und da die Kontaktrollen, insbesondere wenn ihre Laufflächen z.B.aus Chromstahlringen gebildet sind, sich
nicht abnutzen, bedarf die Markiervorrichtung keinerlei
Wartung. Indem die Karteneinzieh- und rückschubvorrichtung für eine bestimmte, konstante Rückschubgeschwindigkeit ausgeführt und der Markierstrom - wie weiter unten
beschrieben - in Abhängigkeit von der Zeit ein- und ausgeschaltet wird, kann eine sehr genaue Markierung erzielt werden, auf welche die Beschleunigung am Anfang
des Kartenrückschubs keinen Einfluss hat.

Im folgenden wird die Erfindung anhand von lediglich
einen Ausführungsweg darstellender Zeichnungen näher
erläutert. Es zeigen:

Fig. 1    eine Draufsicht auf einen Teil einer Wertkarte,

Fig. 2    einen Querschnitt der Wertkartenführung mit Markiervorrichtung eines im übrigen nicht dargestellten Automaten, der bei Verwendung der
          Karte nach Fig. 1 eine Leistung höchstens im
          Wert des Restbetrages der Karte vermittelt.

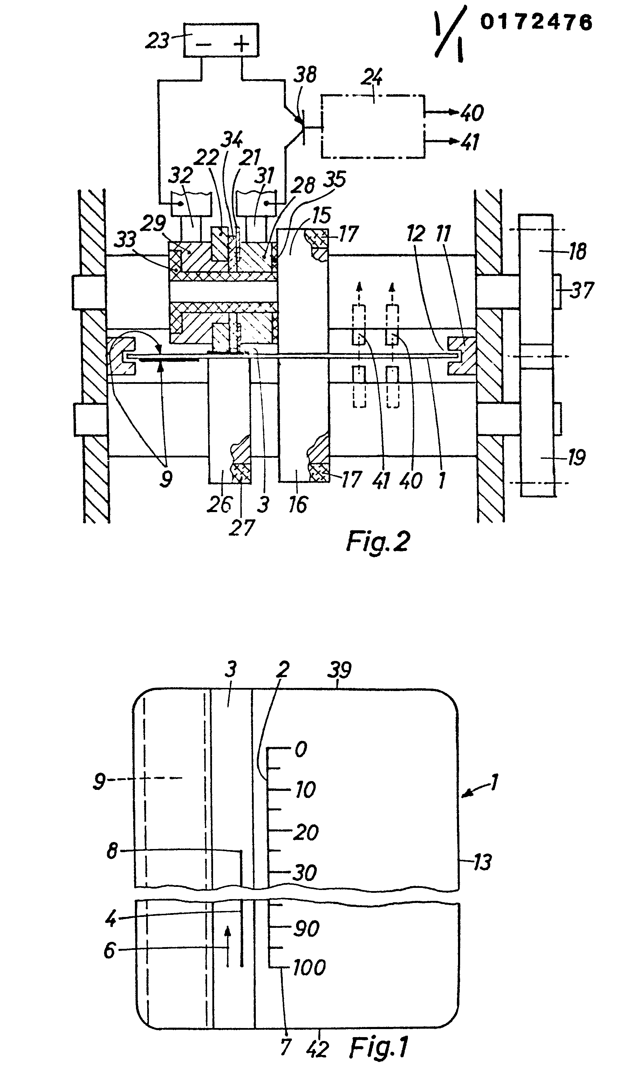

In Fig. 1 ist eine Wertkarte 1 dargestellt, deren Vorderseite mit einer in Längsrichtung der Karte verlaufenden
Skala 2 versehen ist. Die Länge der Skala 2 entspricht
dem Wert, für den der Karteninhaber insgesamt Leistungen
beanspruchen kann. Die Skala 2 ist in Werteinheiten geteilt, die Geldeinheiten oder Einheiten der Leistung,
die der Automat vermittelt, sind, z.B. Dienstleistungseinheiten, wie Gebühreneinheiten für die Herstellung
und Aufrechterhaltung von Fernsprechverbindungen, oder
Warenwerteinheiten. Parallel neben der Skala 2 ist ebenfalls auf der Kartenvorderseite ein Markierfeld 3 vorgesehen. Eine Markiervorrichtung des Automaten markiert
bei jeder Verwendung der Karte 1 einen Teil einer Strecke 4, der dem Wert der Leistung entspricht, die
der Automat bei der betreffenden Verwendung vermittelt
hat. Diese Strecke verläuft in Richtung 6 abnehmender
Skalenwerte und beginnt bei der erstmaligen Verwendung
der Karte neben dem Skalenende 7, an dem der Gesamtwert
(im Beispiel 100 Werteinheiten) ablesbar ist, für den
der Karteninhaber Leistungen von für die Karte eingerichteten Automaten beanspruchen kann. Bei jeder weiteren Verwendung der Karte beginnt diese Strecke am Ende
der zuletzt markierten Strecke oder wiederum neben dem Skalenende 7.
Auf diese Weise entsteht eine am Skalenende 7 beginnende Markierung, deren
Länge dem Gesamtbetrag der aufgrund der Karte durch Automaten vermittelten Leistungen entspricht. Der jeweils
noch verfügbare Restbetrag entspricht der noch nicht
neben der Skala 2 markierten Strecke, er kann neben dem
Ende 8 der Markierung an der Skala 2 unmittelbar abgelesen werden, in Fig. 1 sind es 25 Werteinheiten. Die
Karte 1 hat auf ihrer Vorderseite oder Rückseite einen magnetischen Aufzeichnungsträger 9 üblicher Art.

Das Markierfeld 3 der Karte 1 hat eine Oberfläche,
die durch Stromübergang örtlich begrenzt, dauerhaft
und sichtbar veränderbar ist, beispielsweise eine sehr
dünne Aluminiumschicht, die der Beschichtung von sogenanntem elektrosensitivem Papier entspricht. Zur Vereinfachung der Kartenherstellung kann ein Streifen aus
solchem elektrosensitiven Papier fest mit der Karte verbunden, insbesondere aufgeklebt werden. Am einfachsten
ist es dabei, wenn der das Markierfeld 3 bildende Streifen sich, wie in Fig. 1, über die ganze Kartenlänge
erstreckt, wobei seine die Skala überragenden Enden unbenutzt bleiben. Auf einem solchen Streifen entsteht
bei Verwendung der im folgenden beschriebenen Markiervorrichtung eine fast schwarze Markierung der im übrigen hellgrauen Aluminiumfläche.

In Fig. 2 ist eine Wertkartenführung eines Automaten
mit einer Markiervorrichtung für im Zusammenhang mit
Fig. 1 beschriebene Karten dargestellt. Die Führung hat
Führungsschienen 11 mit Führungsnuten 12 für die
Kartenlängsränder 13 (Fig. 1) und zum Karteneinzug
und -rückzug zwangsläufig miteinander antreibbare
Transportrollenpaare, von denen nur ein Paar dargestellt
ist, dessen Rollen 15 und 16 einen gummielastischen Mantel 17 haben und drehfest mit einem Paar miteinander
kämmender Zahnräder 18 und 19 verbunden sind.

Die Markiervorrichtung hat eine Kontaktrolle 21 mit
schmaler Lauffläche und eine von dieser elektrisch
isolierte Kontaktrolle 22 mit breiter, z.B. 10 mal
breiterer Lauffläche. Beide Kontaktrollen 21 und 22
laufen beim Karteneinzug und -rückzug auf dem Markierfeld 3 der Karte 1, sie sind mit einer Stromquelle 23
verbunden, die von einer Steuervorrichtung 24 des Automaten so ein- und ausgeschaltet wird, dass beim Kartenrückzug eine zur Skala 2 parallele Strecke auf dem Markierfeld 3 markiert wird, deren Länge dem Wert der unmittelbar vorher durch den Automaten vermittelten Leistung entspricht. Diese Strecke beginnt bei erstmaliger
Verwendung der Karte neben dem Skalenende 7 und bei
jeder weiteren Verwendung entweder am Ende der zuletzt markierten
Strecke oder aber wiederum neben dem Skalenende 7, so dass die insgesamt markierte Strecke 4 jeweils dem Gesamtwert der durch die
Karte vermittelten Leistungen entspricht.

Der Markiervorgang besteht darin dass die sehr dünne
Aluminiumschicht infolge der grossen Stromdichte an der
kleinen Stelle, an der die Kontaktrolle 21 diese Schicht
berührt, abbrennt bzw. oxidiert und dadurch dauerhaft
und deutlich sichtbar verändert wird.

Die Kontaktrollen 21 und 22 sind dicht nebeneinander koaxial zur Transportrolle 15 angeordnet und drehfest mit dieser verbunden. Eine Andruckrolle 26 mit gummielastischem Mantel 27 ist den Kontaktrollen 21 und 22 zugeordnet, koaxial zur Transportrolle 16 angeordnet und drehfest mit dieser verbunden. Jede der Kontaktrollen 21 und 22 ist durch einen die Lauffläche aufweisenden Ring aus Chromstahl gebildet, der fest mit einem Messingschleifring 28 bzw. 29 verbunden ist, auf dem zur Stromzufuhr eine Bürste 31 bzw. 32 in bei rotierenden elektrischen Maschinen bekannter Art gleitet. Die Bürsten 31 und 32 können statt (wie gezeichnet) oben, auch seitlich schräg angeordnet werden, so dass auch diese Teile der Markiervorrichtung innerhalb der Kartenführung 11, 12, 15, 16 sind und keinen zusätzlichen Raum beanspruchen. Die Kontaktrollen 21 und 22 sind durch eine Isolierhülse 33 und Isolierringe 34 und 35 voneinander, von der gemeinsamen Welle 37 und von der Transportrolle 15 elektrisch isoliert.

Für handelsübliches elektrosensitives Papier hat die Stromquelle 23 zweckmässig eine Spannung von 24 V, wobei am Anfang des Markiervorgangs kurzzeitig ein Strom von 1,5 A und während des Markierens von 0,2 bis 0,3 A fliesst. Der Strom wird mittels eines von der Steuervorrichtung 24 gesteuerten Schalttransistors 38 zeitabhängig ein- und ausgeschaltet, wobei die Transportrollen 15, 16 für eine bestimmte konstante Kartenrückschubgeschwindigkeit angetrieben werden müssen.

Die beschriebene Markiervorrichtung arbeitet zusammen mit anderen, bei Automaten für Wertkarten vorliegender Art üblichen, nicht dargestellten, Teilen der Steuervorrichtung 24 beispielsweise wie folgt: Beim Einführen der Karte 1 in Richtung 6 in den Automaten löst ein nicht dargestellter Sensor, beispielsweise eine
Lichtschranke, den Antrieb der Transportrollen 15, 16
aus, um die Karte 1 in die Kartenführung zu ziehen.
Ein zweiter Sensor 40 (z.B. Lichtschranke) stoppt den
Antrieb, wenn die Karte 1 ihre Endlage in der Kartenführung erreicht. In dieser Lage hat das Skalenende 7
vom benachbarten Kartenquerrand 42 einen grösseren Abstand als die Stelle, an der die Kontaktrollen 21 und 22
das Markierfeld 3 der Karte 1 berühren, so dass beim
Kartenrückschub (entgegengesetzt zur Richtung 6) trotz
anfänglich beschleunigter Bewegung die bestimmte, konstante Geschwindigkeit erreicht ist, wenn die Kontaktrollen 21 und 22 neben dem Skalenende 7 sind. Während
des Einziehens der Karte 1 liest ein nicht dargestellter
Lesekopf die auf den Aufzeichnungsträger 9 der Karte 1
magnetisch aufgezeichneten Daten: Allgemeine Kenndaten,
ursprünglicher Wert der Karte und Wert der durch die
Karte 1 vorher insgesamt vermittelten Leistungen. Die
gelesenen Daten werden in Speichern gespeichert. Ergibt
eine Prüfung der Kenndaten, dass die Karte grundsätzlich nicht zur Leistungsvermittlung durch den Automaten berechtigt, so wird dies an einer Anzeigevorrichtung angezeigt, und die Karte wird ohne weiteres zurückgegeben. Andernfalls ermittelt ein Rechner den Restwert der Karte als Differenz aus dem ursprünglichen
Wert und dem Wert der insgesamt bereits mit der Karte
vermittelten Leistungen. Dann steuert die Steuervorrichtung 24 den Automaten zur Vermittlung der vom Karteninhaber an einer nicht dargestellten Eingabevorrichtung gewählten Leistung, falls oder solange der Wert
dieser Leistung den ermittelten Restwert nicht überschreitet. Ein Rechner addiert nach Vermittlung dieser
Leistung deren Wert zu dem gelesenen Wert der vorher
durch die Karte bereits vermittelten Leistungen, dividiert die erhaltene Summe durch das Teilverhältnis der Skala (Gesamtwert der durch die Karte vermittelbaren
Leistung : Skalenlänge), dividiert die dadurch erhaltene Länge der insgesamt zu markierenden Strecke
durch die bestimmte, konstante Rückschubgeschwindigkeit und erhält als Ergebnis die Zeit, während der die
Kontaktrollen 21 und 22 diese Strecke auf dem Markierfeld zurücklegen. Die Steuervorrichtung 24 löst den
Kartenrückschub aus. Sobald die Karte die Stellung erreicht hat, in der die Kontaktrollen 21 und 22 neben
dem Skalenende 7 sind, spricht eine dritte Sonde 41
(z.B. Lichtschranke) auf den Kartenquerrand 39 an. Dadurch wird der Schalttransistor 38 eingeschaltet und
nach Ablauf der vom Rechner ermittelten Zeit ausgeschaltet, während der die Kontaktrollen 21 und 22 auf dem
Markierfeld 3 eine Strecke zurücklegen, deren Länge
dem vom Rechner ermittelten Wert aller bis dahin durch
die Karte vermittelten Leistungen entspricht. Während
des Kartenrückschubes löscht ein nicht dargestellter
Löschkopf die vorher vom Lesekopf gelesene Aufzeichnung
des Wertes der vorher insgesamt durch die Karte vermittelten Leistungen, und ein nicht dargestellter Aufzeichnungskopf zeichnet an deren Stelle den vom Rechner ermittelten Wert der nun insgesamt vermittelten
Leistungen auf dem Aufzeichnungsträger 9 der Karte 1
auf. Der Karteninhaber erhält die Karte 1 zurück, auf
der er den für ihn noch verfügbaren Restwert(25 Werteinheiten in Fig. 1) neben dem Ende 8 der insgesamt
markierten Strecke 4 an der Skala 2 ablesen kann.

Wie ersichtlich, wird bei dieser Betriebsweise die
Stromquelle 23 beim Kartenrückschub jedesmal dann mit
den Kontaktrollen 21 und 22 verbunden, wenn diese neben
dem Skalenende 7 auf dem Markierungsfeld 3 der Karte
1 sind. Die Kontaktrollen 21 und 22 sind also bei mehrfacher Verwendung der Karte 1 mit der Stromquelle 23 verbunden, während sie auf einer bereits markierten Strecke laufen. Soweit die Kontaktrolle 21 dabei genau auf der bereits markierten Strecke läuft, fliesst kein Strom. Andernfalls wird die bereits vorhandene Markierung etwas verbreitert, was am beabsichtigten Ergebnis nichts ändert.

Zur Steuerung des gesamten Automaten dient zweckmässig ein Mikroprozessor, der für die zeitabhängige Steuerung mit einem Zeitimpulsgeber ausgerüstet ist.

HK/eo-7122
16.7.84

## Patentansprüche

1. Wertkarte (1) mit Restwertmarkierung, mit einer in Werteinheiten geteilten Skala (2), deren Länge dem Wert (100) der Leistungen entspricht, die mittels der Karte durch dafür vorgesehene Automaten insgesamt vermittelbar sind, und mit einem neben der Skala (2) angeordneten Markierfeld (3), auf dem eine Markiervorrichtung (21, 22, 23, 38) des jeweils eine Leistung vermittelnden Automaten eine Strecke (4) in Richtung (6) abnehmender Skalenwerte markiert, deren Gesamtlänge nach jeder Leistungsvermittlung dem Wert der durch die Karte insgesamt vermittelten Leistungen entspricht, und die (4) neben dem Skalenende (7) beginnt, so dass der jeweils noch verfügbare Restwert neben dem Ende (8) der markierten Strecke (4) an der Skala (2) unmittelbar ablesbar ist; und Automat mit Markiervorrichtung (21, 22, 23, 38) für die Karte (1), dadurch gekennzeichnet, dass die Oberfläche des Markierfeldes (3) der Karte durch Stromübergang örtlich begrenzt, dauerhaft und sichtbar veränderbar ist, und dass die Markiervorrichtung (21, 22, 23, 38) des Automaten zwei Kontaktrollen (21, 22) hat, die beim Karteneinzug und -rückschub auf dem Markierfeld (3) der Karte (1) laufen und mit einer Stromquelle (23) verbunden sind, die von einer Steuervorrichtung (24, 38) des Automaten ein- und ausschaltbar ist, um die dem Wert der jeweils vermittelten Leistung entsprechende Strecke (4) zu markieren.

2. Karte nach Anspruch 1, dadurch gekennzeichnet, dass das Markierfeld (3) der Karte (1) eine durch elektrisches Schmelzen, Abbrennen oder Oxidieren veränderbare Metallschicht, insbesondere Aluminiumschicht, aufweist.

3.  Karte nach Anspruch 2, dadurch gekennzeichnet, dass das Markierfeld (3) durch einen mit der Kartenoberfläche fest verbundenen Streifen aus elektrosensitivem Papier gebildet ist.

4.  Automat nach Anspruch 1, dadurch gekennzeichnet, dass eine (22) der Kontaktrollen (21, 22) eine breite, zylindrische Lauffläche und die andere (21) eine schmale Lauffläche hat, und dass das Verhältnis der Breiten der Laufflächen vorzugsweise annähernd 10 : 1 ist.

5.  Automat nach Anspruch 1 oder 4, dadurch gekennzeichnet, dass die Laufflächen der Kontaktrollen der Markiervorrichtung aus Chromstahlringen (21, 22) gebildet sind.

6.  Automat nach Anspruch 1, 4 oder 5, dadurch gekennzeichnet, dass die Kontaktrollen (21, 22) koaxial eng nebeneinander angeordnet sind.

7.  Automat nach Anspruch 6, dadurch gekennzeichnet, dass die Kontaktrollen (21, 22) drehfest mit einer Transportrolle (15) eines Transportrollenpaares (15, 16) der Kartenführung (11, 12, 15, 16) des Automaten verbunden sind, und dass eine, den beiden Kontaktrollen (21, 22) zugeordnete Andruckrolle (26) drehfest mit der anderen Transportrolle (16) des Transportrollenpaares (15, 16) verbunden ist.

8.  Automat nach einem der Ansprüche 4 bis 7, gekennzeichnet durch einen mit der Steuervorrichtung (24) verbundenen Sensor (41), der beim Kartenrückschub in der Stellung der Karte (1), in der die schmale Kontaktrolle (21) neben dem Skalenende (7) ist, anspricht und dadurch die Stromzufuhr zu den Kontaktrollen (21, 22) einschaltet.

9. Automat nach Anspruch 8, dadurch gekennzeichnet, dass der Sensor (41) auf einen der quer zur Karteneinzug- und -rückschubrichtung verlaufenden Ränder (39, 42) der Karte (1) anspricht.

10. Automat nach Anspruch 8 oder 9, dadurch gekennzeichnet, dass die Transportrollen (15, 16) der Kartenvorschub- und -rückzugvorrichtung beim Kartenrückschub mit einer bestimmten, konstanten Geschwindigkeit angetrieben sind, und dass die Steuervorrichtung (24, 38) die Stromzufuhr zu den Kontaktrollen (21, 22) unterbricht, wenn nach dem Ansprechen des Sensors (41) die Zeit vergangen ist, in der die Karte (1) eine Rückschubwegstrecke zurücklegt, die gleich der Markierungsstrecke (4) ist, die den gesamten durch die Karte (1) vermittelten Leistungen entspricht.

HK/eo-7122
16.7.84

Fig.2

Fig.1

## EINSCHLÄGIGE DOKUMENTE

EP 85109752.7

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | EP - A2 - 0 061 722 (J.HENGSTLER KG) <br><br> * Patentansprüche 1,3,10,11,16; Fig. 2,3,9,10 * | 1-3 | G 07 F 7/02 |
| A | | 8,10 | |
| | -- | | |
| Y | WO - A1 - 83/00 401 (STOCKBURGER) <br><br> * Seite 5, Zeilen 1-15; Patentansprüche 7,8; Fig. 2 * | 1-3 | |
| | -- | | |
| Y | WO - A1 - 80/01 010 (STOCKBURGER) <br><br> * Seite 4, Zeilen 3-31; Seite 5, Zeilen 1-7; Seite 6, Zeilen 13-14; Seite 10, Zeilen 8-11; Patentansprüche 1-5; Fig. 1,2* | 1-3 | |
| A | -- | 8,9,10 | **RECHERCHIERTE SACHGEBIETE (Int. Cl 4)** |
| A | DE - A - 1 424 815 (LICENTIA PATENT-VERWALTUNGS-GMBH) <br><br> * Seite 1, 1.Absatz - Seite 2, 3. Absatz; Patentanspruch 1; Fig. 1,4 * | 1,2 | G 06 K 1/00 <br> G 06 K 19/00 <br> G 07 F 7/00 <br> H 04 M 17/00 |
| | -- | | |
| A | DE - A1 - 3 300 850 (STANDARD ELEKTRIK LORENZ AG) <br><br> * Gesamt * | | |
| | -- | | |
| P,A | CH - A5 - 646 026 (LGZ LANDIS U. GYR ZUG AG) <br><br> * Gesamt * | 1 | |
| | ---- | | |

Der vorliegende Recherchenbericht wurde für alle Patentansprüche erstellt

| Recherchenort | Abschlußdatum der Recherche | Prüfer |
|---|---|---|
| WIEN | 25-11-1985 | BEHMER |